# EUROPEAN PATENT APPLICATION

(11) **EP 3 557 666 A1**
(43) Date of publication of application: **23.10.2019**
(21) Application number: 17881394.5
(22) Date of filing: 06.12.2017
(51) Int. Cl.: H01M 4/36, C08J 3/12, C08K 3/04, C08K 3/08, C08K 7/06, C08L 1/02, C08L 71/02, H01M 4/1393, H01M 4/1395, H01M 4/38, H01M 4/587, H01M 4/62

(54) **GRANULAR COMPOSITE, NEGATIVE ELECTRODE FOR LITHIUM ION SECONDARY BATTERY, AND METHOD FOR MANUFACTURING SAME**

(30) Priority: 15.12.2016 JP 2016242959
(71) Applicant: Showa Denko K.K., Tokyo 105-8518 (JP)
(72) Inventor: KURITA Takayuki, Tokyo 105-8518 (JP); TAKEUCHI Masataka, Tokyo 105-8518 (JP); ISHII Nobuaki, Tokyo 105-8518 (JP)
(74) Representative: Strehl Schübel-Hopf & Partner
(86) International application number: PCT/JP2017/043805
(87) International publication number: WO 2018/110386

(57) **Abstract**

The present invention provides: a granular composite material, containing: particles (A) each formed of a substance which contains an element capable of intercalating and deintercalating lithium ions and is free of graphite; particles (B) each formed of a substance which contains graphite; carbon fibers (C); a polymer (D) containing a polysaccharide having an unsubstituted or substituted glucopyranose ring or a derivative thereof; and a solid electrolyte (E) containing a linear or branched polyether or a derivative thereof; a negative electrode obtained by laminating an electrode layer containing the granular composite material on a current collector; a method for producing the negative electrode; and a lithium ion secondary battery containing the negative electrode. By using the granular composite material of the present invention in a negative electrode for a lithium ion secondary battery, a lithium ion secondary battery having improved characteristics, such as an energy density, an initial capacity, and a capacity retention rate, can be obtained.

## Description

### Technical Field

The present invention relates to a granular composite material suitable for producing a negative electrode of a lithium ion secondary battery, a negative electrode for a lithium ion secondary battery, and a method of producing the same.

### Background Art

Multi-functionalization of portable electronic devices has been advanced faster than power saving of electronic components. As a result, power consumption of the portable electronic device has been increased. Therefore, an increase in capacity and a reduction in size have been required, more strongly than ever, for a lithium ion secondary battery which is a main power source of the portable electronic device. In addition, along with growth in demand for an electric vehicle, an increase in capacity is also strongly required for the lithium ion secondary battery which is used for the electric vehicle.

As a negative electrode active material, silicon (4,200 mAh/g), which has a higher theoretical capacity than currently used graphite (372 mAh/g), has attracted attention.

However, it has been known that silicon is expanded in volume to about 3 times to about 4 times at maximum along with intercalation of lithium and causes self-destruction, and a lithium ion battery using silicon has significantly low cycle characteristics because silicon is peeled off from an electrode.

As a method of improving the cycle characteristics, there are disclosed: a method involving mixing while heating graphite powder, a carbon precursor, silicon fine powder, and a void forming agent, and calcining the mixture to form voids around the silicon fine powder, to thereby absorb a change in volume (Patent Literature 1); a method involving calcining a mixture of fine powder of a silicon compound, graphite, and a binder to fix the silicon compound by a carbonized product of the binder, to thereby suppress escaping of the silicon compound (Patent Literature 2); and a method involving mixing a silicon compound and conductive carbon, and further, subjecting the mixture to mixing treatment while a compressive force and a shear force are applied thereto to form particles in which the silicon compound and the conductive carbon firmly aggregate with each other while being uniformly dispersed, to thereby effectively suppress a change in volume during charge and discharge (Patent Literature 3).

In Patent Literature 4, there is disclosed a composite in which Si particles are included in graphite in which graphene is partially exfoliated.

In Patent Literature 5, there are disclosed Si-block copolymer core-shell nanoparticles.

### Prior Art Documents

### Patent Literature

[PTL 1] JP 5158460 B2
[PTL 2] JP 2003-223892 A
[PTL 3] JP 5809200 B2
[PTL 4] JP 2014-197551 A (US 9711786 B2)
[PTL 5] JP 2014-224028 A (US 2014-342222 A1)

### Summary of Invention

### Problems to be Solved by Invention

An object of the present invention is to provide a method of producing a negative electrode for a lithium ion secondary battery having a high energy density, and capable of achieving both a high initial capacity and a high capacity retention rate.

### Means to Solve Problem

The present invention includes the following embodiments.
[1] A granular composite material, containing: particles (A) each formed of a substance which contains an element capable of intercalating and deintercalating lithium ions and is free of graphite; particles (B) each formed of a substance which contains graphite; carbon fibers (C); a polymer (D) containing a polysaccharide having an unsubstituted or substituted glucopyranose ring or a derivative thereof; and a solid electrolyte (E), and having a mass ratio (E/D) between the solid electrolyte (E) and the polymer (D) of 0.1 or more and 10 or less.
[2] The granular composite material according to the above-mentioned item [1], wherein the respective particles (A) and the respective carbon fibers (C) are brought into contact with each other via the polymer (D) or the solid electrolyte (E) to form a sub structure (S).
   The granular composite material according to the above-mentioned item [1], wherein the particles (A), the carbon fibers (C), the polymer (D), and the solid electrolyte (E) form a sub structure (S) by bringing the respective particles (A) and the respective carbon fibers (C) into contact with each other via the polymer (D) or the solid electrolyte (E).
[3] The granular composite material according to the above-mentioned item [2], wherein at least part of surfaces of the particles (B) are coated with the sub structure (S).
[4] The granular composite material according to any one of the above-mentioned items [1] to [3], wherein the polymer (D) and the solid electrolyte (E) penetrate between the particles (A) .
[5] The granular composite material according to the above-mentioned item [1], wherein the solid electrolyte (E) contains a linear or branched polyether or a derivative thereof, or a polyimine.
[6] The granular composite material according to the above-mentioned item [5], wherein the solid electrolyte (E) contains at least one selected from the group consisting of linear polyethylene oxide, branched polyethylene oxide, and poly(ethyleneimine).
[7] The granular composite material according to any one of the above-mentioned items [1] to [6], wherein a total amount of the polymer (D) and the solid electrolyte (E) is 2 parts by mass or more and 50 parts by mass or less with respect to 100 parts by mass of a total amount of the particles (A), the particles (B), and the carbon fibers (C).
[8] The granular composite material according to any one of the above-mentioned items [1] to [7], wherein an amount of the carbon fibers (C) is 0.1 part by mass or more and 20 parts by mass or less with respect to 100 parts by mass of a total amount of the particles (A) and the particles (B).
[9] The granular composite material according to any one of the above-mentioned items [1] to [7], wherein an amount of the particles (A) is 10 parts by mass or more and 350 parts by mass or less with respect to 100 parts by mass of the particles (B).
[10] The granular composite material according to any one of the above-mentioned items [1] to [8], wherein a 1 mass% aqueous solution of the polymer (D) has a viscosity at 25°C of 300 mPa·s or more and 6,000 mPa·s or less.
[11] The granular composite material according to any one of the above-mentioned items [1] to [9], wherein the polymer (D) contains a polysaccharide having a polar functional group-substituted glucopyranose ring or a derivative thereof.
[12] The granular composite material according to any one of the above-mentioned items [1] to [11], wherein the particles (A) contain primary particles having a 90% diameter (Dn90) in a number-based cumulative particle size distribution of 200 nm or less.
[13] The granular composite material according to any one of the above-mentioned items [1] to [12], wherein the particles (A) each contain at least one element selected from the group consisting of Si, Sn, Ge, Al, and In.
[14] The granular composite material according to any one of the above-mentioned items [1] to [13], wherein the granular composite material has a tap density of 0.40 g/cm3 or more and 0.95 g/cm3 or less.
[15] The granular composite material according to any one of the above-mentioned items [1] to [14], wherein the granular composite material has a BET specific surface area of 10 m2/g or less.
[16] A slurry or a paste, containing: the granular composite material of any one of the above-mentioned items [1] to [15]; and a binder.
[17] A negative electrode formed by laminating an electrode layer containing the granular composite material of any one of the above-mentioned items [1] to [16] and a binder, and a current collector.
[18] A lithium ion secondary battery, containing the negative electrode of the above-mentioned item [17].
[19] A method of producing a negative electrode for a lithium ion secondary battery, including the steps of: mixing: particles (A) each formed of a substance which contains an element capable of intercalating and deintercalating lithium ions and is free of graphite; particles (B) each formed of a substance which contains graphite; carbon fibers (C); a polymer (D) containing a polysaccharide having an unsubstituted or substituted glucopyranose ring or a derivative thereof; and a solid electrolyte (E) to obtain a granular composite material; mixing a liquid medium, the granular composite material, and a binder to obtain a slurry or a paste; and causing the slurry or the paste to adhere to a current collector.
[20] A granular composite material for producing a negative electrode of a lithium ion secondary battery, containing: particles (A) each formed of a substance which contains an element capable of intercalating and deintercalating lithium ions and is free of graphite; particles (B) each formed of a substance which contains graphite; carbon fibers (C); a polymer (D) containing a polysaccharide having an unsubstituted or substituted glucopyranose ring or a derivative thereof, a 1 mass% aqueous solution of the polymer (D) having a viscosity at 25°C of 300 mPa·s or more and 6,000 mPa·s or less; and a solid electrolyte (E) containing a linear or branched polyether or a derivative thereof,
   wherein a total amount of the polymer (D) and the solid electrolyte (E) is 2 parts by mass or more and 50 parts by mass or less with respect to 100 parts by mass of a total amount of the particles (A), the particles (B), and the carbon fibers (C),
   wherein a mass ratio (E/D) between the solid electrolyte (E) and the polymer (D) is 0.1 or more and 10 or less,
   wherein the respective particles (A) and the respective carbon fibers (C) are brought into contact with each other via the polymer (D) or the solid electrolyte (E) to form a sub structure (S) in an integrated manner, and
   wherein at least part of surfaces of the respective particles (B) are coated with the sub structure (S) and the respective particles (B) are brought into contact with each other via the sub structure (S).

### Advantageous Effects of Invention

The granular composite material of the present invention significantly reduces an electrical resistance of a negative electrode of a lithium ion secondary battery, is excellent in suppressing effect on structural destruction of the negative electrode resulting from expansion and contraction of the particles (A), and significantly improves coulombic efficiency. Accordingly, when the granular composite material of the present invention is used for a negative electrode of a lithium ion secondary battery, the lithium ion secondary battery is improved in characteristics, such as an energy density, an initial capacity, and a capacity retention rate.

According to the present invention, the negative electrode of the lithium ion secondary battery can be produced inexpensively as compared to the related-art methods.

### Brief Description of Drawings

FIG. 1 is an example of a scanning electron microscopic image (SEM image) (×50,000) of a surface of a granular composite material of Example 1.
FIG. 2 is an example of a cross-sectional SEM image (×50,000) of a granular composite material.
FIG. 3 is an example of a SEM image (×1,000) of a granular composite material.
FIG. 4 is an example of a cross-sectional SEM image (×1,000) of a sample in which powder of a granular composite material is embedded in a resin.
FIG. 5 is an example of a scanning electron microscopic image (SEM image) (×20,000) of a surface of a granular composite material of Comparative Example 4.

### Description of Embodiments

### [Granular Composite Material]

A granular composite material according to one embodiment of the present invention contains: particles (A) each formed of a substance which contains an element capable of intercalating and deintercalating lithium ions and is free of graphite; particles (B) each formed of a substance which contains graphite; carbon fibers (C); a polymer (D) containing a polysaccharide having an unsubstituted or substituted glucopyranose ring or a derivative thereof; and a solid electrolyte (E).

In a granular composite material according to one embodiment of the present invention, the particles (A), the carbon fibers (C), the polymer (D), and the solid electrolyte (E) form a sub structure (S).

In the sub structure (S), it is preferred that the respective particles (A) and the respective carbon fibers (C) be distributed almost uniformly.

In the sub structure (S), it is preferred that the polymer (D) and the solid electrolyte (E) loosely surround and retain the particles (A) and the carbon fibers (C) under a state in which voids remain, unlike a matrix resin in a resin composite material which surrounds a filler from its surrounding without any gap.

In a granular composite material according to a preferred embodiment of the present invention, the respective particles (A) and the respective carbon fibers (C) are brought into contact with each other via the polymer (D) and the solid electrolyte (E) to form the sub structure (S) in an integrated manner.

In addition, in the sub structure (S), it is preferred that one or more carbon fibers (C) form a three-dimensional tangled network structure. As the three-dimensional tangled network structure, the one or more carbon fibers (C) are tangled at a low density to form a three-dimensional network structure in a cotton form.

Further, the particles (A) are preferably contained in the three-dimensional tangled network structure. The three-dimensional tangled network structure contains a cage-like space surrounded by the one or more carbon fibers (C) constituting the three-dimensional tangled network structure, and the particles (A) are preferably taken in the space. It is considered that conductive paths are formed between the carbon fibers (C) and the particles (A) with the above-mentioned configuration.

In a granular composite material according to one embodiment of the present invention, at least part of surfaces of the particles (B) are coated with the sub structure (S). The sub structure (S) tends to easily adhere to flat portions or recessed portions of the particles (B). Moreover, the sub structure (S) preferably surrounds the particles (B).

That is, in a granular composite material according to one embodiment the present invention, the respective particles (A) and the respective carbon fibers (C) are brought into contact with each other via the polymer (D) or the solid electrolyte (E) to form the sub structure (S) in an integrated manner, at least part of surfaces of the respective particles (B) are coated with the sub structure (S), and the respective particles (B) are brought into contact with each other via the sub structure (S).

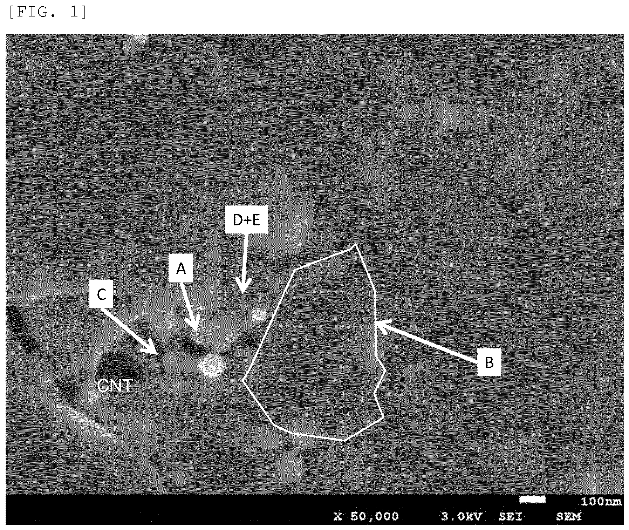

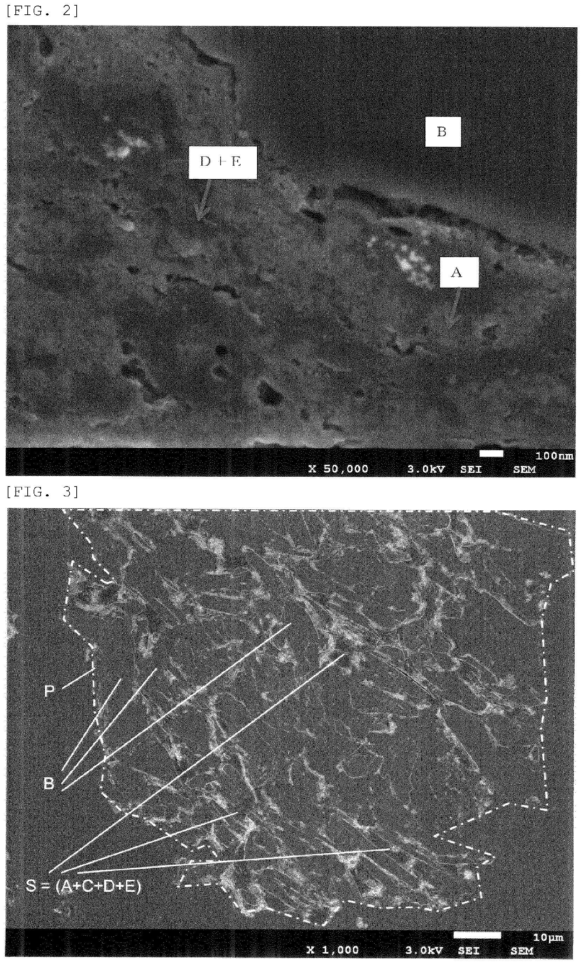

FIG. 1 and FIG. 2 are each a scanning electron microscopic image (SEM image) (×50,000) of a surface of the granular composite material for showing an example of a state of the sub structure (S). In FIG. 1, it can be seen that the particles (A) in a nanometer size and the carbon fibers (C) in a thread form are dispersed under a state of being coated with a film-like material formed of a mixed body of the polymer (D) and the solid electrolyte (E) . In FIG. 2, while the state of the carbon fibers (C) is difficult to determine, the sub structure (S) in which the particles (A) in a nanometer size are dispersed in a mixed body of the polymer (D) and the solid electrolyte (E) is brought into contact with the particles (B) .

FIG. 3 is a SEM image (×1,000) for showing an example of a state in which part of surfaces of the particles (B) are coated with the sub structure (S). In FIG. 3, part of surfaces of the particles (B) each having a size of around 30 µm are coated with the sub structure (S).

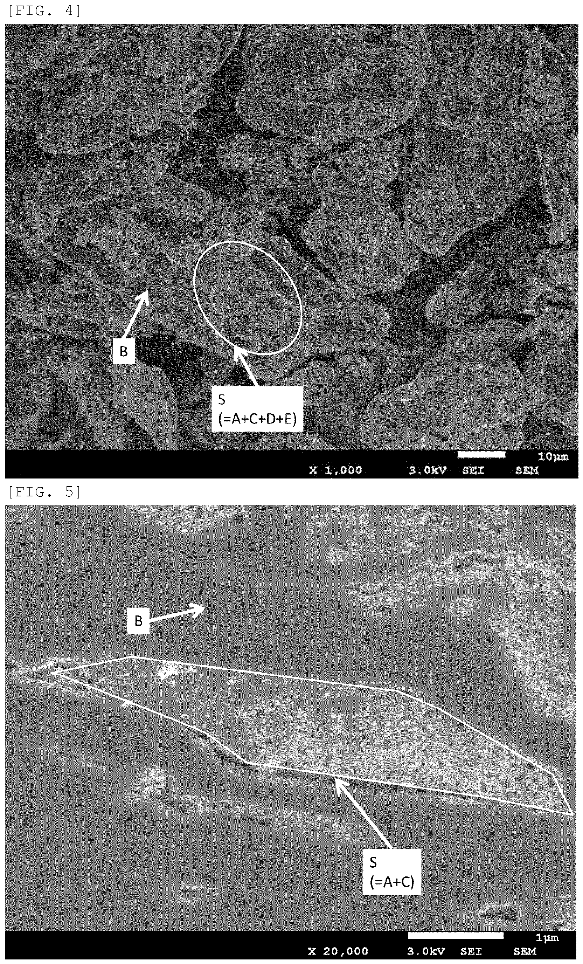

FIG. 4 is a cross-sectional SEM image (×1,000) of an example of the granular composite material of the present invention. The granular composite material shown in the figure has a size of about 100 µm and has a structure in which the sub structure (S) is connected to the particles (B) each having a size of from 10 µm to 30 µm.

In a granular composite material according to one embodiment of the present invention, the polymer (D) and the solid electrolyte (E) penetrate between the particles (A).

With regard to the particles (A), the particles (B), or the carbon fibers (C) serving as a raw material for the granular composite material, the respective particles (A), the respective particles (B), or the respective carbon fibers (C) generally aggregate with one anohter. When the particles (A), the particles (B), the carbon fibers (C), the polymer (D), and the solid electrolyte (E) are dry mixed or wet mixed while a shear force is applied thereto, followed by granulation, the polymer (D) and the solid electrolyte (E) penetrate between the respective particles (A), between the respective particles (B), and between the respective carbon fibers (C) to resolve the aggregation between the same substances. As a result, the particles (A) and the carbon fibers (C) are brought into contact with each other via the polymer (D) and the solid electrolyte (E) to form the sub structure (S) in an integrated manner.

Herein, the polymer (D) and the solid electrolyte (E) preferably form a mixed body. The "mixed body" as used herein refers to a state in which the polymer (D) and the solid electrolyte (E) are not completely separated. Further, it is preferred that at least part of the surfaces of the respective particles (B) be coated with the sub structure (S) and the particles (B) form a clump of granules via the sub structure (S). In an electrode layer obtained by mixing the granular composite material in that state and a binder to prepare a slurry or a paste, and causing the slurry or the paste to adhere to a current collector, strain resulting from expansion and contraction of the particles (A) is relaxed, destruction of the particles (A) or breaking of the conductive paths is prevented, and an increase in resistance in association with an electrochemical change is suppressed. Further, a side reaction on surfaces of the particles (A) and the carbon fibers (C) is suppressed.

In the granular composite material according to one embodiment of the present invention, it is presumed that the mixed body of the polymer (D) and the solid electrolyte (E) intermediates among the respective particles (A), the respective particles (B), and the respective carbon fibers (C), and hence strain resulting from a change in volume of the particles (A) in association with intercalation or deintercalation of lithium ions is absorbed, and destruction of the conductive paths among the respective particles (A), the respective particles (B), and the respective carbon fibers (C) is prevented. In addition, it is presumed that the polymer (D) also contributes to prevention of escaping of the particles (A) from the granular composite material, and to suppression of the side reaction on the surfaces of the particles (A) and the carbon fibers (C). At the same time, the solid electrolyte (E) plays a role in compensating for ionic conductivity reduced owing to the presence of the polymer (D).

In the granular composite material according to a preferred embodiment of the present invention, while the mixed body of the polymer (D) and the solid electrolyte (E) intermediates among the respective particles (A), the respective particles (B), and the respective carbon fibers (C), as described in Examples below, in evaluation of a half cell using an electrode layer to which the granular composite material according to one embodiment of the present invention is applied, the following result is obtained: a value for a potential drop (IR drop), which reflects an internal resistance of a battery, is sufficiently low. From the fact, it is considered that the polymer (D) and the solid electrolyte (E) intermediating between the particles (A), between the particles (B), between the carbon fibers (C), and among: the particles (A); the particles (B); and the carbon fibers (C) do not prevent conduction among the particles (A), the particles (B), and the carbon fibers (C).

The granular composite material has a BET specific surface area of preferably 10 m²/g or less, more preferably 8 m²/g or less, still more preferably 2 m²/g or more and 5 m²/g or less.

The BET specific surface area is measured by a general method involving measuring an adsorption amount and a desorption amount of a gas per unit mass. As a measurement device, for example, a surface area/pore size analyzer (manufactured by Quantachrome Instruments, NOVA 4200c) may be used.

The granular composite material has a tap density of preferably 0.40 g/cm³ or more and 0.95 g/cm³ or less, more preferably 0.55 g/cm³ or more and 0.70 g/cm³ or less. The tap density is obtained by dividing the weight of powder of 50 g by the volume of the powder after being tapped 400 times.

The granular composite material has a 50% diameter Dᵥ₅₀ in a volume-based cumulative particle diameter distribution of preferably 4 µm or more and 95 µm or less, more preferably 4 µm or more and 25 µm or less. The volume-based cumulative particle diameter distribution may be measured with a laser diffraction particle size distribution measurement device, for example, Laser Micron Sizer (LSM-2000e) manufactured by Seishin Enterprise Co., Ltd.

### [Particles (A)]

The particles (A) contained in the granular composite material of the present invention are each formed of a substance which contains an element capable of intercalating and deintercalating lithium ions and is free of graphite.

Preferred examples of the element capable of intercalating and deintercalating lithium ions contained in the particles (A) may include Sb, Pb, Ag, Mg, Zn, Ga, Bi, Si, Sn, Ge, Al, and In. Of those, Si, Sn, Ge, Al, or In is preferred, and Si is preferred from the viewpoint of heat resistance. The particles (A) may each be formed of a simple substance of any one of the above-mentioned elements, or a compound, a mixture, a eutectic substance, or a solid solution containing at least one of the above-mentioned elements. In addition, the particles (A) in a state of being a raw material for the granular composite material, that is, in a state before mixing with the particles (B), the carbon fibers (C), and the polymer (D) may be particles in which a plurality of fine particles aggregate with each other, that is, particles in the form of secondary particles. As the forms of the particles (A), there may be given, for example, a clump form, a flake form, a spherical form, and a fibrous form. Of those, a spherical form or a clump form is preferred.

As a substance containing a Si element, there may be given Si simple substance and a substance represented by the general formula: M^{a}ₘSi. The substance is a compound, a mixture, a eutectic substance, or a solid solution containing the element M^{a} at a ratio of m mol with respect to 1 mol of Si.

M^{a} is an element other than Li. Specific examples of M^{a} may include B, C, N, O, S, P, Na, Mg, Al, K, Ca, Ti, V, Cr, Mn, Fe, Co, Ni, Cu, Zn, Mo, Ru, Rh, Pd, Pt, Be, Nb, Nd, Ce, W, Ta, Ag, Au, Cd, Ga, In, Sb, and Ba. In the formula, m is preferably 0.01 or more, more preferably 0.1 or more, still more preferably 0.3 or more.

Specific examples of the substance containing a Si element may include: Si simple substance; an alloy of Si and an alkaline earth metal; an alloy of Si and a transition metal; an alloy of Si and a semimetal; a solid solution-type alloy or eutectic alloy of Si and Be, Ag, Al, Au, Cd, Ga, In, Sb, or Zn; silicides, such as CaSi, CaSi₂, Mg₂Si, BaSi₂, Cu₅Si, FeSi, FeSi₂, CoSi₂, Ni₂Si, NiSi₂, MnSi, MnSi₂, MoSi₂, CrSi₂, Cr₃Si, TiSi₂, Ti₅Si₃, NbSi₂, NdSi₂, CeSi₂, WSi₂, W₅Si₃, TaSi₂, Ta₅Si₃, PtSi, V₃Si, VSi₂, PdSi, RuSi, and RhSi; and SiO₂, SiC, and Si₃N₄.

As a substance containing a Sn element, there may be given, for example, elemental tin, a tin alloy, tin oxide, tin sulfide, a tin halide, and a stannide.

Specific examples of the substance containing a Sn element include: an alloy of Sn and Zn, an alloy of Sn and Cd, an alloy of Sn and In, and an alloy of Sn and Pb; tin oxides, such as SnO, SnO₂, and M^{b}₄SnO₄ (M^{b} represents a metal element other than Sn) ; tin sulfides, such as SnS, SnS₂, and M^{b}₂SnS₃ (M^{b} represents a metal element other than Sn); tin halides, such as SnX₂, SnX₄, and M^{b}SnX₄ (M^{b} represents a metal element other than Sn, and X represents a halogen element); and stannides, such as MgSn, Mg₂Sn, FeSn, FeSn₂, MoSn, and MoSn₂.

It is preferred that surface layers of the particles (A) be oxidized. The oxidation may be natural oxidation or artificial oxidation. Through the oxidation, the particles (A) are each coated with a thin oxide film.

The particles (A) contain primary particles having a lower limit of a 50% particle diameter (Dₙ₅₀) in a number-based cumulative particle size distribution of preferably 5 nm, more preferably 10 nm, still more preferably 30 nm, and having an upper limit of the 50% particle diameter (Dₙ₅₀) in the number-based cumulative particle size distribution of preferably 1,000 nm, more preferably 500 nm, still more preferably 100 nm.

In addition, the particles (A) contain primary particles having a 90% particle diameter (Dₙ₉₀) in the number-based cumulative particle size distribution of preferably 200 nm or less.

A primary particle diameter may be measured through observation with a scanning electron microscope (SEM) or a transmission electron microscope (TEM). In addition, the primary particle diameter of silicon-containing composite particles may be calculated by subjecting an image of spherical particles observed with a TEM at a magnification of 100,000 times to image analysis.

The particles (A) in the state of being a raw material for the granular composite material are generally a mixture of primary particles and aggregates of the primary particles (i.e., secondary particles). The particles (A) in the raw material state sometimes have peaks in the range of 0.1 µm or more and 1 µm or less and in the range of 10 µm or more and 100 µm or less in a number-based particle size distribution measured without distinguishing between the primary particles and the secondary particles.

In a granular composite material according to one embodiment of the present invention, the particles (A) include particles distributed in the state of primary particles and particles distributed in the state of secondary particles (i.e., aggregate particles). In a number-based cumulative particle size distribution measured by extracting only the particles (A) distributed in the state of secondary particles in the granular composite material, a 50% particle diameter (Dₙ₅₀) is preferably 10 nm or more and 1,000 nm or less.

Further, the particles (A) in the granular composite material are preferably such particles that 95% or more of the total number of the particles (A) is present in a particle diameter range of 10 nm or more and 400 nm or less in the number-based particle size distribution measured without distinguishing between the primary particles and the secondary particles.

### [Particles (B)]

The particles (B) included in the granular composite material of the present invention are each formed of a substance which contains graphite. Graphite has properties of intercalating and deintercalating lithium ions. Examples of the substance containing graphite may include graphite carbon materials, such as artificial graphite, pyrolytic graphite, expanded graphite, natural graphite, and scaly graphite.

The particles (B) have a 50% particle diameter (Dᵥ₅₀) in a volume-based cumulative particle size distribution of preferably 2 µm or more and 40 µm or less, more preferably 2 µm or more and 30 µm or less, still more preferably 3 µm or more and 20 µm or less. When the 50% particle diameter is 2 µm or more, an electrode density is easily increased. In addition, when the 50% particle diameter is 40 µm or less, the diffusion distance in solid of lithium ions is not excessively increased, and output characteristics are not reduced. Therefore, the particles (B) are preferably such particles that 90% or more of the total number of the particles (B) is present in a particle diameter range of 1 µm or more and 50 µm or less in a number-based particle size distribution, more preferably such particles that 90% or more of the total number of the particles (B) is present in a particle diameter range of 5 µm or more and 50 µm or less in the number-based particle size distribution.

In addition, the particles (B) have a 10% particle diameter (Dᵥ₁₀) in the volume-based cumulative particle size distribution of preferably 1 µm or more, more preferably 2 µm or more. The particle size distribution of the particles (B) is measured with a laser diffraction particle size distribution measurement device. The particle size distribution is obtained through measurement without distinguishing between primary particles and secondary particles.

The particles (B) each have a d₀₀₂ of preferably 0.337 nm or less, more preferably 0.336 nm or less. In addition, the particles (B) each have a L_{C} of preferably 50 nm or more, more preferably 50 nm or more and 100 nm or less. The d₀₀₂ is an interlayer spacing of a (002) plane determined from a 002 diffraction line in powder X-ray diffraction, and the L_{C} is a size of a crystallite in a c-axis direction determined from the 002 diffraction line in the powder X-ray diffraction.

The particles (B) each have a BET specific surface area of preferably 1 m²/g or more and 10 m²/g or less, more preferably 1 m²/g or more and 7 m²/g or less. When an upper limit value of the BET specific surface area of the particles (B) exceeds 10 m²/g, there are tendencies that the particle diameter of the granular composite material is increased, and particles in an electrode mixture layer undergo anisotropic volume expansion during charging and discharging. As a result, there are tendencies that an electrode expansion rate is liable to be increased, and the cycle characteristics of a battery are liable to be reduced.

The particles (B) have a median in a number-based cumulative aspect ratio distribution (aspect ratio: long diameter/short diameter) of preferably 1.4 or more and 3.0 or less, more preferably 1.4 or more and 2.0 or less. The particles (B) having such aspect ratio distribution tend to have a large number of flat portions and recessed portions on the surfaces thereof.

For producing the particles (B), coal-based coke and/or petroleum-based coke may be used as a raw material. The particles (B) are preferably obtained by subjecting the coal-based coke and/or the petroleum-based coke to heat treatment at a temperature of preferably 2,000°C or more, more preferably 2,500°C or more. An upper limit of the temperature of the heat treatment is not particularly limited, but is preferably 3,200°C. The heat treatment is preferably performed under an inert atmosphere. For the heat treatment, a conventional Acheson graphitization furnace or the like may be used.

### [Carbon Fibers (C)]

The carbon fibers (C) included in the granular composite material of the present invention are each a carbon material in a fibrous form. Examples of the carbon fibers (C) may include pitch-based carbon fibers, PAN-based carbon fibers, carbon fibers, carbon nanofibers, and carbon nanotubes. From the viewpoint of reducing the addition amount, carbon nanotubes are preferably used.

The carbon fibers (C) have an average fiber diameter of preferably 2 nm or more and 40 nm or less, more preferably 5 nm or more and 40 nm or less, still more preferably 7 nm or more and 20 nm or less. The carbon fibers (C) having a fiber diameter of 2 nm or more are easily dispersed by untangling the fibers one by one. In addition, the carbon fibers (C) having a fiber diameter of 40 nm or less are easily produced by a catalyst supporting method.

Examples of the carbon fibers (C) may include: carbon nanotubes each having a tubular structure in which a graphene sheet formed of carbon six-membered rings is rolled parallel to a fiber axis; carbon nanotubes each having a platelet structure in which a graphene sheet formed of carbon six-membered rings is arranged perpendicular to a fiber axis; and carbon nanotubes each having a herringbone structure in which a graphene sheet formed of carbon six-membered rings is rolled at an oblique angle with respect to a fiber axis. Of those, carbon nanotubes each having a tubular structure are preferred in terms of conductivity and mechanical strength.

The carbon fibers (C) may be, in themselves, linear carbon fibers without distortion or curved carbon fibers in a wiggling manner. The curved carbon fibers in a wiggling manner have higher contact efficiency with the particles (A) in the granular composite material in the same addition amount, and hence are easily uniformly composited with the particles (A) even in a small addition amount. In addition, the curved carbon fibers (C) in a wiggling manner have high followability to a change in shape, and hence it is considered that their contact with the particles (A) is maintained even when the particles (A) are expanded, and a network between the fibers is less liable to be broken.

The carbon fibers (C) each have an aspect ratio of preferably 10 or more and 15,000 or less, more preferably 200 or more and 15,000 or less. When the aspect ratio is 10 or more, the degree of tangling between the fibers is not excessively reduced, and an efficient conductive network is formed. When the aspect ratio is 15,000 or less, the degree of tangling between the fibers is not excessively increased, and satisfactory dispersibility is obtained. Herein, the "aspect ratio" refers to a ratio of an average fiber length to an average fiber diameter.

The carbon fibers (C) each have a BET specific surface area of preferably 150 m²/g or more and 300 m²/g or less, more preferably 240 m²/g or more and 280 m²/g or less, still more preferably 250 m²/g or more and 270 m²/g or less.

The tap density of the carbon fibers (C) is not particularly limited, but is preferably 0.001 g/cm³ or more and 0.1 g/cm³ or less, more preferably 0.005 g/cm³ or more and 0.08 g/cm³ or less. Herein, the "tap density" refers to an apparent density obtained after tapping the fibers 50 times at an amplitude of 2 mm with TAPDENSER KYT-4000K manufactured by Seishin Enterprise Co., Ltd.

In addition, the carbon fibers (C) each have a lattice constant C₀ value of preferably 0.680 nm or more and 0.690 nm or less. When the C₀ value is 0.680 nm or more, the carbon fibers (C) have flexibility, and an aggregate thereof is easily resolved.

The oxidation onset temperature of the carbon fibers (C) is preferably 400°C or more and 550°C or less. Herein, the "oxidation onset temperature" refers to a temperature at which a mass reduction of 0.1% is obtained with respect to an initial mass (loading amount) when a temperature is increased from room temperature to 1,000°C at 10°C/min under an air flow with a thermobalance. When the oxidation onset temperature is 400°C or more, the number of crystal defects in the carbon fibers is reduced. When the oxidation onset temperature is 550°C or less, a large number of the carbon fibers are present under a state of having a tip cap taken off, and Li ion diffusivity is improved.

The carbon fibers (C) each have a compressed specific resistance at a compressed density of 0.8 g/cm³ of preferably 0.014 Qcm or more and 0.020 Qcm or less. When the compressed specific resistance at a compressed density of 0.8 g/cm³ is 0.014 Qcm or more, appropriate flexibility is obtained. In addition, when the compressed specific resistance is 0.020 Qcm or less, a conductivity imparting effect is increased.

The amount of the particles (B) in the granular composite material is preferably 400 parts by mass or more and 810 parts by mass or less, more preferably 400 parts by mass or more and 600 parts by mass or less with respect to 100 parts by mass of the total amount of the particles (A) and the carbon fibers (C).

The amount of the particles (A) in a granular composite material according to one embodiment of the present invention is preferably 10 parts by mass or more and 350 parts by mass or less, more preferably 50 parts by mass or more and 350 parts by mass or less with respect to 100 parts by mass of the particles (B).

The amount of the particles (A) in a granular composite material according to one embodiment of the present invention is preferably 10 parts by mass or more and 350 parts by mass or less, more preferably 50 parts by mass or more and 100 parts by mass or less with respect to 100 parts by mass of the particles (B).

The amount of the carbon fibers (C) in the granular composite material is preferably 10 parts by mass or more and 40 parts by mass or less with respect to 100 parts by mass of the particles (A).

The amount of the carbon fibers (C) in the granular composite material is preferably 0.1 part by mass or more and 20 parts by mass or less, more preferably 0.5 part by mass or more and 5 parts by mass or less with respect to 100 parts by mass of the total amount of the particles (A) and the particles (B).

When the masses of the particles (A), the particles (B), and the carbon fibers (C) fall within the above-mentioned ranges, there are tendencies that coulombic efficiency at the time of aging and coulombic efficiency in a cycle test are increased, a resistance value is reduced, and a capacity retention rate in the cycle test is also increased.

### [Polymer (D)]

The polymer (D) included in the granular composite material of the present invention is preferably a polymer including a polysaccharide having an unsubstituted or substituted glucopyranose ring or a derivative thereof.

The unsubstituted glucopyranose ring in the polysaccharide or the derivative thereof is represented by the formula (1). 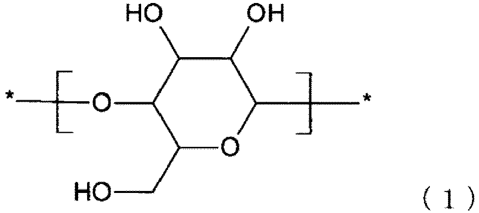 In the formula, "*" represents a bonding hand, and "[]" represents that a structure in the brackets is repeated.

The substituted glucopyranose ring is a ring in which all or some of hydrogen atoms of the unsubstituted glucopyranose ring are substituted. As a substituent, a polar substituent, which can be expected to have a reducing effect on a resistance of a negative electrode, is preferred. Examples of the substituent may include an alkyl group, a carboxyl group, a sulfonic acid group, a phosphonic acid group, an amino group, an ammonium salt group, an alkylene oxy group, an alkoxy group, a hydroxyl group, a carboxyalkyl group, a hydroxyalkyl group, an acetyl group, a nitro group, and a cyanoalkyl group. The alkyl group preferably has 1 or 2 carbon atoms. When a plurality of substituents are included, the plurality of substituents may be the same as or different from each other.

Examples of the polysaccharide or the derivative thereof may include cellulose, starch, a carboxyalkyl cellulose, an alkyl cellulose, a hydroxyalkyl cellulose, a carboxyalkyl starch, an alkyl starch, and a hydroxyalkyl starch.

Of those, carboxymethyl cellulose, hydroxyethyl cellulose, carboxyethyl cellulose, methyl cellulose, ethyl cellulose, cyanoethyl cellulose, oxyethyl cellulose, and the like are suitable. Of those, carboxymethyl cellulose and hydroxyethyl cellulose are preferred because of being excellent in chemical stability.

Those polysaccharides or the derivatives thereof may be used alone or in combination thereof.

A 1 mass% aqueous solution of the polysaccharide or the derivative thereof included in the polymer (D) has a viscosity at 25°C of preferably 300 mPa·s or more and 6,000 mPa·s or less, still more preferably 1,000 Pa·s or more and 3,000 mPa·s or less. When the viscosity falls within the above-mentioned range, a suppressing effect on surface destruction of the particles (B) in a negative electrode is increased.

Herein, the viscosity at 25°C of the 1 mass% aqueous solution refers to a viscosity measured with a B-type viscometer (Brookfield viscometer) using a No. 4 spindle at a rotation speed of 60 rpm.

The polysaccharide or the derivative thereof included in the polymer (D) has a weight average molecular weight of preferably 1.0×10⁴ or more and 6.0×10⁵ or less, more preferably 5.0×10⁴ or more and 6.0×10⁵ or less. When the weight average molecular weight falls within the above-mentioned range, a capability to disperse the particles (A) and the carbon fibers (C) is increased. The weight average molecular weight may be determined as a value converted into a reference sample, such as pullulan, by gel permeation chromatography.

The amount of the polymer (D) in the granular composite material is preferably 10 parts by mass or more and 100 parts by mass or less with respect to 100 parts by mass of the particles (A).

### [Solid Electrolyte (E)]

As the solid electrolyte (E) included in the granular composite material of the present invention, for example, a polyether, a polyester, a polyamine, a polysulfide, or a silicone may be used.

The solid electrolyte (E) preferably contains a polyether or a polyimide because of exhibiting high ionic conductivity, and more preferably contains, as the polyether, a linear polyether or a branched polyether, or a derivative thereof. It is still more preferred to use linear or branched polyethylene oxide, linear or branched polyethylene glycol, or poly(ethyleneimine). As the derivative, a polymer having a polyethylene oxide structure in a molecule thereof is preferred.

The solid electrolyte proceeds with crystallization in a room temperature region and is significantly reduced in ionic conductivity. Therefore, in order to prevent the crystallization, it is preferred to introduce another polymer in the solid electrolyte, or cross-link the solid electrolyte. As a polymer configured to suppress the crystallization of the solid electrolyte, polyethylene glycol, a polyethylene glycol ester, polymethyl methacrylate, or the like is preferred.

As a method of preventing the crystallization of the solid electrolyte, there are also given, in addition to the above-mentioned introduction of the polymer, electron beam cross-linking and introduction of fine ceramic particles aimed at a filler effect. A general acquisition method for an electron beam to be used for the electron beam cross-linking involves heating a tungsten filament in a vacuum of from 10⁻⁵ Torr to 10⁻⁷ Torr, and accelerating generated thermal electrons at a high voltage. As the fine ceramic particles aimed at a filler effect, Al₂O₃, TiO₂, SiO₂, BaTiO₃, or the like is preferred.

In addition, the total amount of the polymer (D) and the solid electrolyte (E) is preferably 2 parts by mass or more and 50 parts by mass or less, more preferably 2 parts by mass or more and 20 parts by mass or less, still more preferably 5 parts by mass or more and 15 parts by mass or less with respect to 100 parts by mass of the total amount of the particles (A), the particles (B), and the carbon fibers (C). When the total amount of the polymer (D) and the solid electrolyte (E) falls within the above-mentioned range, there are tendencies that the resistance of the negative electrode is further reduced, and the capacity retention rate in the cycle test is increased. When the total amount of the polymer (D) and the solid electrolyte (E) is 2 parts by mass or less with respect to the total amount of the particles (A), the particles (B), and the carbon fibers (C), the particles (A) and the carbon fibers (C) may each include a portion not coated with the polymer (D) or the solid electrolyte (E), and hence a side reaction is liable to occur on the particles (A) and the carbon fibers (C), with the result that the coulombic efficiency at the time of aging is reduced or the coulombic efficiency in the cycle test is reduced in some cases.

The mass ratio of the solid electrolyte (E)/the polymer (D) is 0.1 or more and 10 or less, preferably 0.2 or more and 5.0 or less. When the mass ratio of the solid electrolyte (E)/the polymer (D) is more than 10, there are risks in that the mixed body of the polymer (D) and the solid electrolyte (E) is broken in association with a change in volume of the particles (A) in a charge-discharge test, and the structure of the granular composite material is destroyed. When the structure of the composite material is destroyed, the cycle capacity retention rate is significantly reduced. When the mass ratio of the solid electrolyte (E)/the polymer (D) is 10 or less, the mixed body can follow a change in volume of the particles (A), and the mixed body is not broken. Meanwhile, when the mass ratio of the solid electrolyte (E)/the polymer (D) is less than 0.1, ionic conductivity in the mixed body of the polymer (D) and the solid electrolyte (E) is reduced and the resistance is increased in some cases, and in such cases, the cycle capacity retention rate is reduced.

### [Other Components]

The granular composite material of the present invention may further include conductive carbon particles. In the conductive carbon particles, the number-average particle diameter of primary particles is preferably 20 nm or more and 100 nm or less, more preferably 30 nm or more and 50 nm or less. Examples of the conductive carbon particles may include carbon black-based conductive particles, such as acetylene black, furnace black, and Ketjen black. When the conductive carbon particles are added, there is a tendency that the initial capacity of a lithium ion secondary battery is increased.

The amount of the conductive carbon particles is preferably 0.1 part by mass or more and 10 parts by mass or less with respect to 100 parts by mass of the total amount of the particles (A) and the particles (B).

In general, a binder is used for producing a negative electrode. The granular composite material is free of a binder, and hence in the present invention, it is preferred to mix the granular composite material and a binder to prepare a mixture in a slurry or paste form, and produce a negative electrode through use of the mixture.

### [Method of Producing Granular Composite Material]

As a method of producing the granular composite material of the present invention, it is preferred to select a method so that a structure in which at least part of the surfaces of the particles (B) are coated with the sub structure (S) formed of the particles (A), the carbon fibers (C), the polymer (D), and the solid electrolyte (E) is obtained. Examples of the method of producing the granular composite material may include a liquid phase mixing method and a dry mixing method. Of those, a liquid phase mixing method is preferred.

The dry mixing method or the liquid phase mixing method is preferably a method which contributes to uniform dispersion of a solid substance, particularly the polymer (D) and the solid electrolyte (E), by involving imparting mechanical energy, such as collision energy, compression energy, or shear energy, to a target substance.

For example, the method of producing the granular composite material preferably includes mixing the particles (A), the particles (B), the carbon fibers (C), the polymer (D), and the solid electrolyte (E) with a liquid medium, such as water or an organic solvent, and an additive, such as a surfactant, as required, and mixing these components with a mixer capable of applying a shear force (shear stress).

As a liquid phase mixer, there may be given, for example, a planetary mixer, a thin-film spin system high-speed mixer, a versatile mixer, and a powder suction continuous melt-dispersion device. In order to impart a shear force, for example, a circumferential tip speed of a stirring vane is set to preferably 10 m/s or more, more preferably 20 m/s or more. A mixing time period is not particularly limited, but is preferably 2 minutes or more and less than 30 minutes.

As a dry mixer, there may be given, for example, a hybridizer, a dry particle composing machine, a wonder blender, a screw kneader, a Lodige mixer, a planetary mixer, and a versatile mixer. In order to impart a shear force, for example, a circumferential tip speed of a stirring vane is set to preferably 10 m/s or more, more preferably 20 m/s or more. A mixing time period is not particularly limited, but is preferably 6 minutes or more and less than 30 minutes.

The particles (A) and the carbon fibers (C) in the state of being raw materials for the granular composite material generally aggregate with each other, but through the above-mentioned mixing, the aggregation is resolved. Further, the mixed body of the polymer (D) and the solid electrolyte (E) penetrates between the respective particles (A) and the respective carbon fibers (C) having been resolved to form the sub structure (S), to thereby suppress re-aggregation of the particles (A) and the carbon fibers (C). Moreover, the sub structure (S) clings to the particles (B). The liquid medium is removed therefrom as required by a drying operation.

For producing a negative electrode of a lithium ion secondary battery, the granular composite material is, for example, prepared into a slurry or a paste by being mixed with the liquid medium and the binder. The viscosity of the slurry or the paste may be adjusted by the addition amount of the liquid medium or the like so that the slurry or the paste easily adheres to a current collector.

### [Negative Electrode]

A negative electrode for a lithium ion secondary battery is obtained by laminating: an electrode layer containing a binder and the granular composite material; and a current collector with each other.

The negative electrode may be produced by a method including: a step of mixing the granular composite material, a liquid medium, and a binder to obtain a slurry or a paste; and a step of causing the slurry or the paste to adhere to a current collector.

The negative electrode generally has a sheet-like planar shape. The sheet preferably has such flexibility that the sheet can be folded or rolled into a roll shape.

Examples of the current collector may include sheet-like conductive base materials, such as a nickel foil, a copper foil, a nickel mesh, and a copper mesh. In addition, the current collector may include the sheet-like conductive base material and a conductive layer laminated thereon. An example of the conductive layer may be one formed of a conductivity imparting agent, such as conductive carbon particles, and a binder.

The electrode layer may be obtained, for example, by causing the slurry or the paste containing the binder and the granular composite material to adhere to the current collector. The slurry or the paste is obtained, for example, by kneading the granular composite material and the binder, and as required, a liquid medium. It is also appropriate to form the slurry or the paste into a shape, such as a sheet shape or a pellet shape, and cause the resultant formed article to adhere to the current collector by pressure bonding.

The liquid medium is not particularly limited, and examples thereof may include N-methyl-2-pyrrolidone, dimethylformamide, isopropanol, and water. When the binder uses water as a liquid medium, a thickener is preferably used in combination. The amount of the liquid medium is adjusted so that such viscosity that the slurry or the paste is easily applied to the current collector is obtained.

A method of applying the slurry or the paste is not particularly limited. The thickness of the electrode layer is generally 50 µm or more and 200 µm or less. When the thickness of the electrode layer is excessively increased, an electrode sheet cannot be housed in a standardized battery container in some cases. The thickness of the electrode layer may be adjusted by the application amount of the slurry or the paste. In addition, the thickness of the electrode layer may be adjusted through press-forming after the slurry or the paste is dried. As a press-forming method, there may be given, for example, a roll press-forming method and a plate press-forming method.

The electrode layer to which the granular composite material is applied preferably has a volume resistivity measured by a four probe method of 0.5 Ω·cm or less at the time of being not pressed.

The electrode layer of the negative electrode preferably has an apparent density of 1.2 g/cm³ or more and 1.8 g/cm³ or less. The "apparent density" as used herein refers to a value obtained by subtracting the mass of the current collector from the mass of the negative electrode per 1 cm², and dividing the resultant value by the thickness of the negative electrode layer excluding the thickness of the current collector.

### [Lithium Ion Secondary Battery]

A lithium ion secondary battery includes: at least one selected from the group consisting of a non-aqueous electrolytic solution and a non-aqueous polymer electrolyte; a positive electrode sheet; and a negative electrode sheet.

In the lithium ion secondary battery according to the present invention, a sheet-like negative electrode including the granular composite material may be used as a negative electrode.

As the positive electrode sheet, a sheet including a positive electrode active material may be used. As the positive electrode active material, any one kind or two or more kinds of materials (materials each capable of intercalating and deintercalating lithium ions) which have hitherto been known as a positive electrode active material in a lithium-based battery may be appropriately selected and used. Of those, a lithium-containing metal oxide capable of intercalating and deintercalating lithium ions is suitable. An example of the lithium-containing metal oxide may be a composite oxide containing a lithium element and at least one kind of element selected from Co, Mg, Cr, Mn, Ni, Fe, Al, Mo, V, W, Ti, and the like. Specific examples of the positive electrode active material include LiNiO₂, LiCoO₂, LiMn₂O₄, LiNi_{0.34}Mn_{0.33}Co_{0.33}O₂, and LiFePO₄.

The non-aqueous electrolytic solution and the non-aqueous polymer electrolyte to be used in the lithium ion secondary battery of the present invention are not particularly limited, and known materials may be used.

In addition, the electrolytic solution may have added thereto a small amount of a substance which undergoes a decomposition reaction during initial charging of the lithium ion secondary battery. Examples of the substance may include vinylene carbonate (VC), biphenyl, propanesultone (PS), fluoroethylene carbonate (FEC), and ethylene sulfite (ES). The addition amount is preferably from 0.01 mass% to 30 mass%.

The lithium ion secondary battery of the present invention may have a separator arranged between the positive electrode sheet and the negative electrode sheet. Examples of the separator may include a non-woven fabric, a cloth, and a microporous film each including, as a main component, a polyolefin, such as polyethylene or polypropylene, and a combination thereof.

### Examples

Now, the present invention is described in more detail by way of Examples of the granular composite material of the present invention. These examples are merely for illustrative purposes, and the present invention is by no means limited thereto.

### Example 1:

The following materials were used as the particles (A) (particles each formed of a substance which includes an element capable of intercalating and deintercalating lithium ions and is free of graphite), the particles (B) (particles each formed of a substance which contains graphite), the carbon fibers (C), the polymer (D) (polymer including a polysaccharide having an unsubstituted or substituted glucopyranose ring or a derivative thereof), and the solid electrolyte (E).

### Particles (A)

Si particles (Dₙ₉₀: 200 nm or less, Dₙ₅₀ of secondary particles: 100 nm, 95% or more of particles are present in the range of from 10 nm to 400 nm in a number-based particle size distribution)

### Particles (B)

Graphite particles (SCMG (trademark), manufactured by Showa Denko K.K., median in a number-based cumulative aspect ratio distribution: 1.56, Dᵥ₅₀: 12.2 µm, d002: 0.3359 nm, Lc: 93.2 nm)

### Carbon fibers (C)

Carbon nanotubes (CNT) (produced by a vapor-phase growth method, fiber diameter: 10 nm or more and 15 nm or less, aspect ratio: 300 or more and 450 or less, BET specific surface area: 260 m²/g, oxidation onset temperature: 500°C, compressed specific resistance at 0.8 g/cm³: 0.019 Ω·cm)

### Polymer (D)

Carboxymethyl cellulose (CMC) (product number: 1380, manufactured by Daicel Corporation, viscosity at 25°C of a 1 mass% aqueous solution: 1,380 mPa·s)

### Solid electrolyte (E)

Polyethylene oxide (PEO) (M.W.: 100,000, manufactured by Kanto Chemical Co., Inc.)

0.45 g of the particles (A), 0.18 g of the carbon fibers (C), 0.36 g of the polymer (D), 0.09 g of the solid electrolyte (E), 3.42 g of the particles (B), 24 ml of water, and 6 ml of isopropyl alcohol (IPA) were subjected to treatment with a mixer (FILMIX (trademark) model 40-L, manufactured by PRIMIX Corporation) at a circumferential tip speed of a stirring vane of 40 m/s for 5 minutes, to obtain a composite gel (1) formed of the particles (A), the particles (B), the carbon fibers (C), the polymer (D), and the solid electrolyte (E).

Next, the composite gel (1) was dried at 80°C under vacuum overnight, and then the dried article was crushed with an agate mortar to obtain a granular composite material A.

A slurry was prepared by adding 0.1 g of an ethylenevinyl acetate-acrylic acid copolymer aqueous emulsion (POLYSOL (trademark), manufactured by Showa Denko K.K.), 1.6 g of carboxymethyl cellulose (product number: 1380, manufactured by Daicel Corporation), and 1.6 g of purified water to 1.552 g of the granular composite material A. The slurry was applied to a copper foil and dried at 50°C under normal pressure to remove a solvent. Thus, an electrode sheet was obtained. The electrode sheet was pressed at 20 t for 20 seconds.

### <Confirmation of Sub Structure>

A cross section of the electrode after the pressing was polished with a cross section polisher (CP), and was then observed with a scanning electron microscope (SEM). As a result, as shown in FIG. 1, it was confirmed that the particles (A), the carbon fibers (C), the polymer (D), and the solid electrolyte (E) formed a sub structure (S). In addition, it was confirmed that part of surfaces of the particles (B) were covered with the sub structure (S). Further, it was confirmed that the polymer (D) and the solid electrolyte (E) penetrated between the particles (A).

The electrode sheet was punched into a size measuring 20 mm×20 mm to obtain a working electrode. A lead made of nickel was welded to the working electrode.

The following operation was performed in a glove box in which a high-purity argon gas atmosphere having a dew point of -80°C or less was retained.

A polypropylene sheet (40 mm×40 mm), the working electrode (20 mm×20 mm), a separator (40 mm×35 mm), a Li foil for a counter electrode (25 mm×30 mm), and a polypropylene sheet (40 mm×40 mm) were laminated in the stated order. A sheet of laminate packing material (140 mm×100 mm) was folded so as to give a size measuring 70 mm×100 mm, the above-mentioned laminate was inserted therebetween, and one short side (70 mm) of the laminate packing material was heat sealed.

A Li foil for a reference electrode (10 mm×30 mm) was inserted therein from a long side (100 mm) of the laminate packing material not having been heat sealed, and was arranged so as to be brought into contact with a surface of the separator on a working electrode side. The Li foil for a reference electrode and the working electrode are in such a positional relationship that the Li foil for a reference electrode and the working electrode are not brought into contact with each other. After that, the long side (100 mm) of the packing material was heat sealed.

500 µL of an electrolytic solution (electrolyte: 1 M LiPF₆, solvent: EC/FEC/EMC/DEC=2/1/5/2 (volume ratio); manufactured by Kishida Chemical Co., Ltd.) was poured from the other short side of the laminate packing material not having been heat sealed. Next, the other short side of the laminate packing material was heat sealed while performing vacuuming. Thus, a three-electrode-type laminated half cell for evaluation was obtained.

### <Aging Treatment>

Next, aging treatment was performed as described below.

The obtained half cell was set in a charge-discharge device, and constant current discharge was performed at 300 µA/g from a rest potential to 10 mV. Next, constant current charge was performed at 300 µA/g and cut off at 1.0 V. Coulombic efficiency (see below) after the aging treatment was 88.2%.

### <Cycle Test>

The half cell having been subjected to the aging treatment was set in a charge-discharge device. Constant current discharge was performed at 6.0 mA/g from a rest potential to 10 mV, and constant voltage discharge was performed after a voltage of 10 mV was achieved, and cut off at 30 mA/g. Next, constant current charge was performed at 6.0 mA/g and cut off at 1.0 V. The charge-discharge cycle was repeated 100 times.

A 1st cycle charge capacity, a 100th cycle charge capacity, a ratio of the 100th cycle charge capacity to the 1st cycle charge capacity (100th cycle capacity retention rate), an average value of coulombic efficiency in a 2nd cycle to a 40th cycle [(charge capacity/discharge capacity)×100)], and an average value of coulombic efficiency in a 90th cycle to a 100th cycle were measured. The results are shown in Table 3.

In addition, a potential drop (IR drop) was measured 30 minutes after the cutting off of the constant current charge in the 20th cycle. A value for the IR drop mainly reflects an internal resistance of a battery. As the resistance value of the electrode layer including the granular composite material becomes smaller, the value for the IR drop also becomes smaller.

In Example 1, it is presumed that the value for the IR drop can be suppressed to be small because PEO having higher conductivity is used as the solid electrolyte (E).

### Example 2:

A granular composite material B was obtained by the same method as in Example 1 except that the masses of the polymer (D) and the solid electrolyte (E) were changed to 0.09 g and 0.36 g, respectively. The presence or absence of a sub structure, the coating state of the particles (B), and the presence or absence of penetration of the polymer (D) and the solid electrolyte (E) between the particles (A) were confirmed.

A half cell was produced by the same method as in Example 1 except that the granular composite material A was changed to the granular composite material B, and the half cell was subjected to aging and a cycle test. The results are shown in Table 3. The result is that the 1st cycle charge capacity is particularly large. This is presumably because Li ion diffusivity is improved by increasing the amount of the solid electrolyte (E).

### Example 3:

A granular composite material C was obtained by the same method as in Example 1 except that the polymer (D) was changed to hydroxyethyl cellulose (HEC, product number: SP850, manufactured by Daicel Corporation, viscosity at 25°C of a 1 mass% aqueous solution: 2,600 mPa·s).

A half cell was produced by the same method as in Example 1 except that the granular composite material A was changed to the granular composite material C, and the half cell was subjected to aging and a cycle test. The results are shown in Table 3. It is found that, even in the case of using hydroxyethyl cellulose (HEC) as the polymer (D), performance comparable to that in the case of using carboxymethyl cellulose (CMC) is exhibited.

### Example 4:

A granular composite material D was obtained by the same method as in Example 1 except that the polymer (E) was changed to poly(ethyleneimine) (M.W.: from 50,000 to 60,000, manufactured by Kanto Chemical Co., Inc.).

A half cell was produced by the same method as in Example 1 except that the granular composite material A was changed to the granular composite material D, and the half cell was subjected to aging and a cycle test. The results are shown in Table 3.

It is found that, even when polyethylene oxide serving as the solid electrolyte (E) is replaced by poly(ethyleneimine), comparable results are exhibited.

### Comparative Example 1:

A granular composite material E was obtained by the same method as in Example 1 except that the masses of the polymer (D) and the solid electrolyte (E) were changed to 0.432 g and 0.018 g, respectively.

A half cell was produced by the same method as in Example 1 except that the granular composite material A was changed to the granular composite material E, and the half cell was subjected to aging and a cycle test. The results are shown in Table 3. The value for the IR drop was as large as 0.025. This is because the mass ratio (E/D) of the solid electrolyte (E) to the polymer (D) is as small as 0.04, and hence Li ion diffusivity is reduced.

### Comparative Example 2:

A granular composite material F was obtained by the same method as in Example 1 except that the masses of the polymer (D) and the solid electrolyte (E) were changed to 0.018 g and 0.432 g, respectively.

A half cell was produced by the same method as in Example 1 except that the granular composite material A was changed to the granular composite material F, and the half cell was subjected to aging and a cycle test. The results are shown in Table 3. The 100th cycle capacity retention rate is as small as 69.5%. This is because the mass ratio (E/D) of the solid electrolyte (E) to the polymer (D) is as large as 24, and hence the electrode cannot withstand expansion of the particles (A).

### Comparative Example 3:

A granular composite material G was obtained by the same method as in Example 1 except that the masses of the polymer (D) and the solid electrolyte (E) were changed to 0.45 g and 0 g, respectively.

A half cell was produced by the same method as in Example 1 except that the granular composite material A was changed to the granular composite material G, and the half cell was subjected to aging and a cycle test. The results are shown in Table 3. It is found that the IR drop is significantly increased as compared to that of Example 1. This is because the solid electrolyte (E) (PEO) which plays a role in increasing ionic conductivity in the mixed body is not included.

### Comparative Example 4:

A granular composite material O was obtained by the same method as in Example 1 except that the polymer (D) and the solid electrolyte (E) were not introduced.

A half cell was produced by the same method as in Example 1 except that the granular composite material A was changed to the granular composite material O, and the half cell was subjected to aging and a cycle test. The results are shown in Table 3.

It is found that the particles (A) and the carbon fibers (C) are not coated with any material owing to the absence of the polymer (D) and the solid electrolyte (E), with the result that a side reaction with the electrolytic solution significantly proceeds, and every coulombic efficiency is reduced. Further, a cross section of the electrode used in the cycle test was polished with a cross section polisher, and was then observed with a scanning electron microscope (SEM) (×20,000). As a result, as shown in FIG. 5, the particles (A) and the carbon fibers (C) which were not coated with any material were able to be observed, and it was confirmed that the sub structure (S) was not formed.

### Example 5:

A granular composite material H was obtained by the same method as in Example 1 except that the particles (A) were changed to Sn particles (Dₙ₉₀: 200 nm or less, Dₙ₅₀: 80 nm, Dₙ₅₀ of secondary particles: 120 nm, 95% or more of particles were present in the range of from 10 nm to 400 nm in a number-based particle size distribution).

A half cell was produced by the same method as in Example 1 except that the granular composite material A was changed to the granular composite material H, and the half cell was subjected to aging and a cycle test. The results are shown in Table 4. It is presumed that the value for the IR drop can be suppressed to be small by using PEO having higher conductivity as the solid electrolyte (E).

### Example 6:

A granular composite material I was obtained by the same method as in Example 5 except that the masses of the polymer (D) and the solid electrolyte (E) were changed to 0.09 g and 0.36 g, respectively.

A half cell was produced by the same method as in Example 1 except that the granular composite material A was changed to the granular composite material I, and the half cell was subjected to aging and a cycle test. The results are shown in Table 4. The 1st cycle charge capacity is particularly large. This is presumably because Li ion diffusivity is improved by increasing the amount of the solid electrolyte (E).

### Example 7:

A granular composite material J was obtained by the same method as in Example 5 except that the polymer (D) was changed to hydroxyethyl cellulose (HEC, product number: SP850, manufactured by Daicel Corporation, viscosity at 25°C of a 1 mass% aqueous solution: 2,600 mPa·s).

A half cell was produced by the same method as in Example 1 except that the granular composite material A was changed to the granular composite material J, and the half cell was subjected to aging and a cycle test. The results are shown in Table 4. It is found that, even in the case of using hydroxyethyl cellulose (HEC) as the polymer (D), performance comparable to that in the case of using carboxymethyl cellulose (CMC) is exhibited.

### Example 8:

A granular composite material K was obtained by the same method as in Example 5 except that the solid electrolyte (E) was changed to polyethyleneimine (M.W.: from 50,000 to 60,000, manufactured by Kanto Chemical Co., Inc.).

A half cell was produced by the same method as in Example 1 except that the granular composite material A was changed to the granular composite material K, and the half cell was subjected to aging and a cycle test. The results are shown in Table 4. It is found that, even when polyethylene oxide serving as the solid electrolyte (E) is replaced by poly(ethyleneimine), comparable results are exhibited.

### Comparative Example 5:

A granular composite material L was obtained by the same method as in Example 8 except that the masses of the polymer (D) and the solid electrolyte (E) were changed to 0.432 g and 0.018 g, respectively.

A half cell was produced by the same method as in Example 1 except that the granular composite material A was changed to the granular composite material L, and the half cell was subjected to aging and a cycle test. The results are shown in Table 4. When the amount of the solid electrolyte (E) is significantly small with respect to the amount of the polymer (D), the resistance is increased, and the IR drop is increased.

### Comparative Example 6:

A granular composite material M was obtained by the same method as in Example 5 except that the masses of the polymer (D) and the solid electrolyte (E) were changed to 0.018 g and 0.432 g, respectively.

A half cell was produced by the same method as in Example 1 except that the granular composite material A was changed to the granular composite material M, and the half cell was subjected to aging and a cycle test. The results are shown in Table 4. The 100th cycle capacity retention rate is as small as 69.9%. This is presumably because the mass ratio of the solid electrolyte (E)/the polymer (D) is as large as 24, and hence the electrode cannot withstand expansion of the particles (A).

### Comparative Example 7:

A granular composite material N was obtained by the same method as in Example 8 except that the masses of the polymer (D) and the solid electrolyte (E) were changed to 0.45 g and 0 g, respectively.

A half cell was produced by the same method as in Example 1 except that the granular composite material A was changed to the granular composite material N, and the half cell was subjected to aging and a cycle test. The results are shown in Table 4. The IR drop is increased as compared to that of Example 8. This is presumably because the solid electrolyte (E) which plays a role in increasing ionic conductivity in the mixed body is not included.

### Comparative Example 8:

A granular composite material P was obtained by the same method as in Example 5 except that the polymer (D) and the solid electrolyte (E) were not introduced.

A half cell was produced by the same method as in Example 1 except that the granular composite material A was changed to the granular composite material P, and the half cell was subjected to aging and a cycle test. The results are shown in Table 4.

It is found that the particles (A) and the carbon fibers (C) are not coated with any material owing to the absence of the polymer (D) and the solid electrolyte (E), with the result that a side reaction with the electrolytic solution significantly proceeds, and every coulombic efficiency is reduced.

**Table 1**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Granular composite material | | A | B | C | D | E | F | G | O |
| Particles A | | Si | Si | Si | Si | Si | Si | Si | Si |
| mass [g] | | 0.45 | 0.45 | 0.45 | 0.45 | 0.45 | 0.45 | 0.45 | 0.45 |
| Particles B | | SCMG | SCMG | SCMG | SCMG | SCMG | SCMG | SCMG | SCMG |
| mass [g] | | 3.42 | 3.42 | 3.42 | 3.42 | 3.42 | 3.42 | 3.42 | 3.42 |
| Carbon fibers C | | CNT | CNT | CNT | CNT | CNT | CNT | CNT | CNT |
| mass [g] | | 0.18 | 0.18 | 0.18 | 0.18 | 0.18 | 0.18 | 0.18 | 0.18 |
| Polymer D | | CMC#1380 | CMC#1380 | HEC#SP850 | CMC#1380 | CMC#1381 | CMC#1382 | CMC#1383 | - |
| mass [g] | | 0.36 | 0.09 | 0.36 | 0.36 | 0.432 | 0.018 | 0.45 | - |
| Solid electrolyte E | | PEO | PEO | PEO | Poly(ethyleneimine) | PEO | PEO | - | - |
| mass [g] | | 0.09 | 0.36 | 0.09 | 0.09 | 0.018 | 0.432 | - | - |
| Parts by mass of A (with respect to 100 parts by mass of B) | | 13 | 13 | 13 | 13 | 13 | 13 | 13 | 13 |
| Parts by mass of B (with respect to 100 parts by mass of (A+C)) | | 543 | 543 | 543 | 543 | 543 | 543 | 543 | 543 |
| Parts by mass of C (with respect to 100 parts by mass of (A+B)) | | 4.7 | 4.7 | 4.7 | 4.7 | 4.7 | 4.7 | 4.7 | 4.7 |
| Parts by mass of (D+E) (with respect to 100 parts by mass of (A+B+C)) | | 11 | 11 | 11 | 11 | 11 | 11 | 11 | 0 |
| E/D Ratio | | 0.25 | 4.0 | 0.25 | 0.25 | 0.04 | 24 | - | - |
| Presence or absence of sub structure (S) | | Present | Present | Present | Present | Present | Present | Absent | Absent |
| Presence or absence of coating of particles (B) with sub structure | | Present | Present | Present | Present | Present | Present | Absent | Absent |
| Presence or absence of penetration of polymer (D) and polymer (E) between particles (A) | | Present | Present | Present | Present | Present | Present | Absent | Absent |
| Granular composite material | Dᵥ₅₀ [µm] | 22 | 20 | 22 | 21 | 21 | 21 | 22 | 22 |
| | BET specific surface area [m²/g] | 2.41 | 2.62 | 2.43 | 2.59 | 2.56 | 2.57 | 2.43 | 10.21 |
| | Tap density [g/cm³] | 0.62 | 0.57 | 0.65 | 0.55 | 0.64 | 0.52 | 0.62 | 0.51 |

**Table 2**

| | | Example 5 | Example 6 | Example 7 | Example 8 | Comparative Example 5 | Comparative Example 6 | Comparative Example 7 | Comparative Example 8 |
|---|---|---|---|---|---|---|---|---|---|
| Granular composite material | | H | I | J | K | L | M | N | P |
| Particles A | | Sn | Sn | Sn | Sn | Sn | Sn | Sn | Sn |
| mass [g] | | 0.45 | 0.45 | 0.45 | 0.45 | 0.45 | 0.45 | 0.45 | 0.45 |
| Particles B | | SCMG | SCMG | SCMG | SCMG | SCMG | SCMG | SCMG | SCMG |
| mass [g] | | 3.42 | 3.42 | 3.42 | 3.42 | 3.42 | 3.42 | 3.42 | 3.42 |
| Carbon fibers C | | CNT | CNT | CNT | CNT | CNT | CNT | CNT | CNT |
| mass [g] | | 0.18 | 0.18 | 0.18 | 0.18 | 0.18 | 0.18 | 0.18 | 0.18 |
| Polymer D | | CMC#1384 | CMC#1385 | HEC#SP850 | CMC#1382 | CMC#1383 | CMC#1384 | CMC#1385 | - |
| mass [g] | | 0.36 | 0.09 | 0.36 | 0.36 | 0.432 | 0.018 | 0.45 | - |
| Solid electrolyte E | | PEO | PEO | PEO | Poly(ethyleneimine) | PEO | PEO | - | - |
| mass [g] | | 0.09 | 0.36 | 0.09 | 0.09 | 0.018 | 0.432 | - | - |
| Parts by mass of A (with respect to 100 parts by mass of B) | | 13 | 13 | 13 | 13 | 13 | 13 | 13 | 13 |
| Parts by mass of B (with respect to 100 parts by mass of (A+C)) | | 543 | 543 | 543 | 543 | 543 | 543 | 543 | 543 |
| Parts by mass of C (with respect to 100 parts by mass of (A+B)) | | 4.7 | 4.7 | 4.7 | 4.7 | 4.7 | 4.7 | 4.7 | 4.7 |
| Parts by mass of (D+E) (with respect to 100 parts by mass of (A+B+C)) | | 11 | 11 | 11 | 11 | 11 | 11 | 11 | 0 |
| E/D Ratio | | 0.25 | 4.0 | 0.25 | 0.25 | 0.04 | 24 | - | - |
| Presence or absence of sub structure (S) | | Present | Present | Present | Present | Present | Present | Absent | Absent |
| Presence or absence of coating of particles (B) with sub structure | | Present | Present | Present | Present | Present | Present | Absent | Absent |
| Presence or absence of penetration of polymer (D) and polymer (E) between particles (A) | | Present | Present | Present | Present | Present | Present | Absent | Absent |
| Granular composite material | Dᵥ₅₀ [µm] | 21 | 22 | 20 | 21 | 20 | 22 | 22 | 20 |
| | BET specific surface area [m²/g] | 2.42 | 2.61 | 2.37 | 2.53 | 2.48 | 2.55 | 2.44 | 11.32 |
| | Tap density [g/cm³] | 0.67 | 0.61 | 0.64 | 0.65 | 0.61 | 0.58 | 0.62 | 0.53 |

**Table 3**

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Granular composite material | A | B | C | D | E | F | G | O |
| Electrode apparent density [g / cm³] | 1.64 | 1.64 | 1.63 | 1.61 | 1.65 | 1.63 | 1.65 | 1.61 |
| 1st cycle charge capacity [mAh/g] | 593.4 | 601.2 | 596.9 | 598.2 | 597.2 | 591.7 | 595.2 | 589.1 |
| 100th cycle charge capacity [mAh/g] | 533.5 | 535.7 | 537.8 | 538.4 | 530.9 | 411.2 | 528.5 | 523.1 |
| 100rh cycle capacity retention rate [%] | 89.9 | 89.1 | 90.1 | 90.0 | 88.9 | 69.5 | 88.8 | 88.8 |
| Average value of coulombic efficiency in 2nd to 40th cycles [%] | 99.1 | 99.1 | 99.0 | 99.1 | 99.1 | 98.1 | 99.0 | 97.1 |
| Average value of coulombic efficiency in 90th to 100th cycles [%] | 99.9 | 99.9 | 99.9 | 99.9 | 99.8 | 98.9 | 99.8 | 97.5 |
| Coulombic efficiency after aging treatment [%] | 88.2 | 88.5 | 88.1 | 88.3 | 88.2 | 88.1 | 88.3 | 86.2 |
| IR drop [V] | 0.015 | 0.014 | 0.016 | 0.019 | 0.025 | 0.017 | 0.030 | 0.010 |

**Table 4**

| | Example 5 | Example 6 | Example 7 | Example 8 | Comparative Example 5 | Comparative Example 6 | Comparative Example 7 | Comparative Example 8 |
|---|---|---|---|---|---|---|---|---|
| Granular composite material | H | I | J | K | L | M | N | P |
| Electrode apparent density [g / cm³] | 1.63 | 1.65 | 1.63 | 1.64 | 1.64 | 1.63 | 1.63 | 1.62 |
| 1st cycle charge capacity [mAh/g] | 392.4 | 396.1 | 395.9 | 394.4 | 395.8 | 393.3 | 394.3 | 395.1 |
| 100th cycle charge capacity [mAh/g] | 352.4 | 352.5 | 356.3 | 353.0 | 351.9 | 274.9 | 350.5 | 351.2 |
| 100rh cycle capacity retention rate [%] | 89.8 | 89.0 | 90.0 | 89.5 | 88.9 | 69.9 | 88.9 | 88.9 |
| Average value of coulombic efficiency in 2nd to 40th cycles [%] | 99.2 | 99.1 | 99.1 | 99.2 | 99.2 | 97.9 | 99.2 | 96.3 |
| Average value of coulombic efficiency in 90th to 100th cycles [%] | 99.9 | 99.9 | 99.9 | 99.9 | 99.8 | 98.4 | 99.8 | 96.4 |
| Coulombic efficiency after aging treatment [%] | 88.3 | 88.4 | 88.2 | 88.2 | 88.2 | 88.5 | 88.3 | 86.8 |
| IR drop [V] | 0.014 | 0.015 | 0.013 | 0.020 | 0.027 | 0.016 | 0.031 | 0.011 |

### Reference Signs List

- A:: particle (A)
- B:: particle (B)
- C:: carbon fiber (C)
- D:: polymer (D)
- E:: solid electrolyte (E)
- S:: sub structure (S)
- P:: granular composite material

## Claims

1. A granular composite material, containing: particles (A) each formed of a substance which contains an element capable of intercalating and deintercalating lithium ions and is free of graphite; particles (B) each formed of a substance which contains graphite; carbon fibers (C); a polymer (D) containing a polysaccharide having an unsubstituted or substituted glucopyranose ring or a derivative thereof; and a solid electrolyte (E), and having a mass ratio (E/D) between the solid electrolyte (E) and the polymer (D) of 0.1 or more and 10 or less.

2. The granular composite material according to claim 1, wherein the respective particles (A) and the respective carbon fibers (C) are brought into contact with each other via the polymer (D) or the solid electrolyte (E) to form a sub structure (S).

3. The granular composite material according to claim 2, wherein at least part of surfaces of the particles (B) are coated with the sub structure (S).

4. The granular composite material according to any one of claims 1 to 3, wherein the polymer (D) and the solid electrolyte (E) penetrate between the particles (A).

5. The granular composite material according to claim 1, wherein the solid electrolyte (E) contains a linear or branched polyether or a derivative thereof, or a polyimine.

6. The granular composite material according to claim 5, wherein the solid electrolyte (E) contains at least one selected from the group consisting of linear polyethylene oxide, branched polyethylene oxide, and poly(ethyleneimine).

7. The granular composite material according to any one of claims 1 to 6, wherein a total amount of the polymer (D) and the solid electrolyte (E) is 2 parts by mass or more and 50 parts by mass or less with respect to 100 parts by mass of a total amount of the particles (A), the particles (B), and the carbon fibers (C).

8. The granular composite material according to any one of claims 1 to 7, wherein an amount of the carbon fibers (C) is 0.1 part by mass or more and 20 parts by mass or less with respect to 100 parts by mass of a total amount of the particles (A) and the particles (B).

9. The granular composite material according to any one of claims 1 to 7, wherein an amount of the particles (A) is 10 parts by mass or more and 350 parts by mass or less with respect to 100 parts by mass of the particles (B).

10. The granular composite material according to any one of claims 1 to 8, wherein a 1 mass% aqueous solution of the polymer (D) has a viscosity at 25°C of 300 mPa·s or more and 6,000 mPa·s or less.

11. The granular composite material according to any one of claims 1 to 9, wherein the polymer (D) contains a polysaccharide having a polar functional group-substituted glucopyranose ring or a derivative thereof.

12. The granular composite material according to any one of claims 1 to 11, wherein the particles (A) contain primary particles having a 90% diameter (Dₙ₉₀) in a number-based cumulative particle size distribution of 200 nm or less.

13. The granular composite material according to any one of claims 1 to 12, wherein the particles (A) each contain at least one element selected from the group consisting of Si, Sn, Ge, Al, and In.

14. A slurry or a paste, containing: the granular composite material of any one of claims 1 to 13; and a binder.

15. A negative electrode formed by laminating an electrode layer containing the granular composite material of any one of claims 1 to 14 and a binder, and a current collector.

16. A lithium ion secondary battery, containing the negative electrode of claim 15.

17. A method of producing a negative electrode for a lithium ion secondary battery, including the steps of: mixing:
particles (A) each formed of a substance which contains an element capable of intercalating and deintercalating lithium ions and is free of graphite; particles (B) each formed of a substance which contains graphite; carbon fibers (C); a polymer (D) containing a polysaccharide having an unsubstituted or substituted glucopyranose ring or a derivative thereof; and a solid electrolyte (E) to obtain a granular composite material; mixing a liquid medium, the granular composite material, and a binder to obtain a slurry or a paste; and causing the slurry or the paste to adhere to a current collector.
